# EUROPÄISCHE PATENTSCHRIFT

(11) **EP 0 387 393 B1**
(45) Veröffentlichungstag und Bekanntmachung des Hinweises auf die Patenterteilung: **31.03.1993**
(21) Anmeldenummer: 89112019.8
(22) Anmeldetag: 01.07.1989
(51) Int. Cl.: G01F 23/68

(54) **Niveaugeber**
Level sensor
Capteur de niveau

(30) Priorität: 16.03.1989 DE 3908543
(43) Veröffentlichungstag der Anmeldung: 19.09.1990
(73) Patentinhaber: VDO Adolf Schindling AG, D-60487 Frankfurt (DE)
(72) Erfinder: Rau, Karl, D-6052 Mühlheim/M. (DE); Stengl, Reinhard, D-6362 Wöllstadt 1 (DE)
(74) Vertreter: Klein, Thomas, Dipl.-Ing. (FH)

(56) Entgegenhaltungen:
- GB-A- 2 130 733
- US-A- 2 906 122
- US-A- 4 702 107

## Beschreibung

Die Erfindung betrifft einen Niveaugeber für Kraftstoffbehälter von Kraftfahrzeugen, welcher eine eine elektrische Widerstandsbahn bildende Wicklung aufweist, auf der ein Schwimmer höhenverschieblich angeordnet ist, welcher mit einem ersten Schleifkontakt gegen die Widerstandsbahn anliegt, wobei die Widerstandsbahn an einer Spannungsquelle angeschlossen ist und der Schwimmer einen zweiten, mit dem ersten Schleifkontakt leitend verbundenen zweiten Schleifkontakt trägt, der an einem Leiter in Anlage ist.

Aus der GB-A-21 30 733 ist ein Niveaugeber bekannt, bei dem ein Schwimmer einen über die Widerstandsbahn führenden Stromkreis schließt, wobei der Widerstand dieses Stromkreises von der Stellung des Schwimmers und deshalb vom Füllstand des Behälters abhängt, in dem der Niveaugeber angeordnet ist. Bei der Widerstandsbahn handelt es sich meist um eine Wicklung, über die die Spannungszuführung erfolgt. Als Spannungsrückführung dient üblicherweise eine Drahtwendel, welche von der oberen Seite des Führungsschaftes derart zum Schwimmer verläuft, daß dieser sich möglichst unbehindert auf und ab bewegen kann. Eine solche Spannungsrückführung ist relativ aufwendig aufgebaut und empfindlich gegenüber im Kraftfahrzeug auftretenden Schwingungen.

Aus der US-A-29 06 122 ist ein Niveaugeber der eingangs genannten Art bekannt, bei dem in einem sowohl als Führungsrohr für den Schwimmer als auch als Spannungsrückführung dienenden Rohr die die Wicklung bildende Widerstandsbahn angeordnet ist. Die Wicklung ist schraubenfederartig ausgebildet und mit ihrem oberen Ende ortsfest befestigt. Das untere Ende der Wicklung ist in unterschiedlichen Höhenpositionen mittels eines Klemmstücks am Rohr befestigt. Der eine Schleifer liegt an dem Rohr an während der andere Schleifer durch einen Längsschlitz in das Innere des Rohres ragt und dort an der Wicklung anliegt. Da die Wicklung führungslos im Rohr angeordnet ist, kann sie bei Erschütterungen sowohl von dem ihr zugeordneten Schleifer abheben als auch zur Anlage an der Innenwand des Rohres gelangen. Beides führt zu Fehlsignalen.

Aus der US-A-47 02 107 ist ein Niveaugeber bekannt, der eine als Führung dienende Führungsplatte aufweist, die schichtartig aufgebracht eine Spannungsrückführungsbahn und eine Widerstandsbahn trägt.

Auf der Führungsplatte ist vertikal bewegbar ein Schwimmer angeordnet, der zwei Schleifkontakte trägt, von denen einer an der Spannungsrückführungsbahn und der andere an der Widerstandsbahn in Anlage ist.

Der Erfindung liegt die Aufgabe zugrunde, einen Niveaugeber der eingangs genannten Art so auszubilden, daß er möglichst einfach, robust und gegenüber Schwingungen unempfindlich aufgebaut ist.

Diese Aufgabe wird erfindungsgemäß dadurch gelöst, daß die Widerstandsbahn ein einen Führungsschaft bildendes Wicklungsrohr ist, das einen klammerartig von einer Seite her aufgeschobenen Kontaktträger trägt, der zur Spannungsrückführung mit einer in seiner Längsrichtung verlaufenden Leiterbahn ausgebildet ist, an der der zweite Schleifkontakt anliegt.

Durch diese Gestaltung kann man auf eine frei durch den Raum geführte und deshalb schwingungsempfindliche Spannungsrückführung vom Schwimmer verzichten. Der Kontaktträger, welcher zur Spannungsrückführung dient, kann gänzlich ohne Werkzeug auf einfache Weise auf das Wicklungsrohr aufgeschoben werden und ist anschließend dort zuverlässig und schwingungsunempfindlich gehalten.

Die Leiterbahn kann als separates Bauteil gefertigt und anschließend ebenfalls ohne Werkzeug und ohne daß es irgendwelcher Befestigungsmittel bedarf im Kontaktträger befestigt werden, wenn gemäß einer Ausgestaltung der Erfindung die Leiterbahn in eine in Längsrichtung des Kontaktträgers verlaufende, zur offenen Seite hin sich widerhakenartig verengende Nut eingeklipst ist.

Die von den Schleifen ausgeübten Kräfte gleichen sich gegenseitig aus, so daß ein Verklemmen des Schwimmers nicht zu befürchten ist, wenn gemäß einer anderen Ausgestaltung der Erfindung die zwei Schleifkontakte einander gegenüberliegend angeordnet sind.

Konstruktiv besonders einfach ist der Kontaktträger gestaltet, wenn er als Rohrkörper ausgebildet ist, welcher zum Aufschieben auf das Wicklungsrohr und zum Durchgreifen des das Wicklungsrohr kontaktierenden Schleifkontaktes einen in Längsrichtung über seine gesamte Länge verlaufenden Schlitz aufweist.

Eine alternative Ausführungsform, bei der der Materialverbrauch für den Kontaktträger besonders gering ist, besteht darin, daß der Kontaktträger aus einem die Leiterbahn tragenden Halteabschnitt und zumindest zwei Paaren von über das Wicklungsrohr greifenden Klammerarmen besteht.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: einen Längsschnitt durch einen unteren Bereich eines Niveaugebers nach der Erfindung,
- Fig. 2: einen horizontalen Schnitt durch den Niveaugeber.

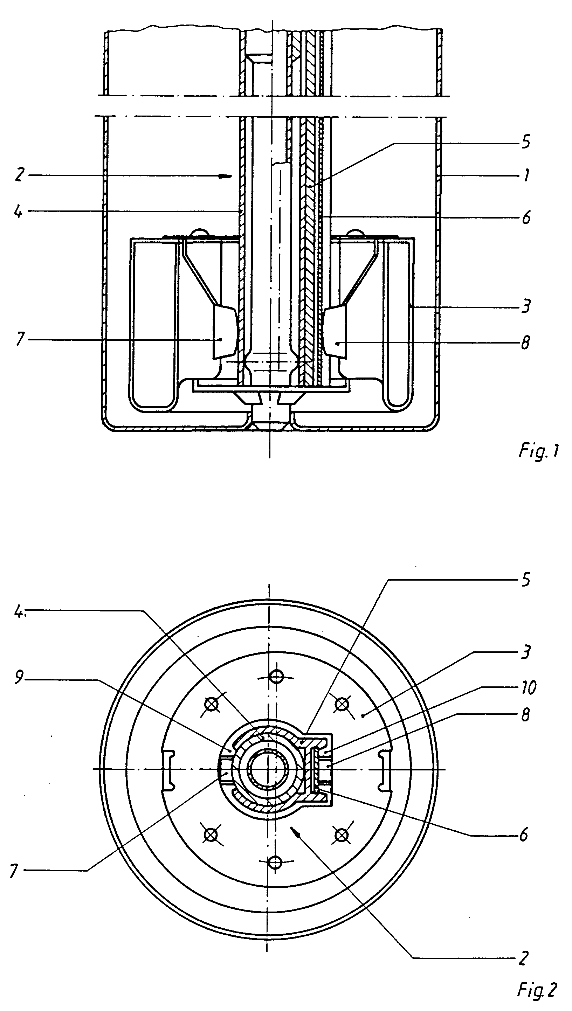

Die Figur 1 zeigt ein Schutzrohr 1, in dem ein Führungsschaft 2 angeordnet ist, der einen höhenverschieblichen Schwimmer 3 führt. Der Führungsschaft 2 besteht aus einem Wicklungsrohr 4 und einem in Figur 1 gesehen von der rechten Seite aufgeschobenen Kontaktträger 5 mit einer Leiterbahn 6. Der Schwimmer 3 hat einander gegenüberliegend zwei Schleifkontakte 7, 8, von denen einer gegen das Wicklungsrohr 4 und der andere gegen die Leiterbahn 6 anliegt. Das obere, nicht gezeigte Ende des Wicklungsrohres 4 ist beispielsweise an einem elektrischen Pol und die Leiterbahn 6 am anderen Pol angeschlossen, so daß über den Schwimmer 3 und seine beiden Schleifkontakte 7, 8 der Stromkreis geschlossen wird.

Die Figur 2 zeigt das Wicklungsrohr 4 im Querschnitt. Zu sehen ist, daß der Kontaktträger 5 einen senkrechten Schlitz 9 hat und dadurch von rechts her auf das Wicklungsrohr 4 aufgeschoben werden kann, so daß er auf diesem klammerartig gehalten ist. Der Schleifkontakt 7 greift durch den Schlitz 9 und kann deshalb das Wicklungsrohr 4 kontaktieren. Die Figur 2 läßt weiterhin erkennen, daß die Leiterbahn 6 in eine Nut 10 des Kontaktträgers 5 eingeklipst ist. Zu diesem Zweck verengt sich der Querschnitt der Nut 10 zur offenen Seite hin widerhakenartig. Der Schleifkontakt 8 ist in Figur 2 ebenfalls dargestellt und positioniert.

Nicht gezeigt ist, daß der Kontaktträger 5 auch aus einem die Leiterbahn 6 aufnehmenden Halteabschnitt und mehreren Paaren von über das Wicklungsrohr greifenden Haltearmen gebildet sein kann.

## Patentansprüche

1. Niveaugeber, insbesondere für Kraftstoffbehälter von Kraftfahrzeugen, welcher eine eine elektrische Widerstandsbahn bildende Wicklung aufweist, auf der ein Schwimmer höhenverschiebbar angeordnet ist, welcher mit einem ersten Schleifkontakt gegen die Widerstandsbahn anliegt, wobei die Widerstandsbahn an einer Spannungsquelle angeschlossen ist und der Schwimmer einen zweiten, mit dem ersten Schleifkontakt leitend verbundenen Schleifkontakt trägt, dadurch gekennzeichnet, daß die Widerstandsbahn ein einen Führungsschaft bildendes Wicklungsrohr (4) ist, das einen klammerartig von der Seite aufgeschobenen Kontaktträger (5) trägt, der zur Spannungsrückführung mit einer in seiner Längsrichtung verlaufenden Leiterbahn (6) ausgebildet ist, an der der zweite Schleifkontakt (8) anliegt.

2. Niveaugeber nach Anspruch 1, dadurch gekennzeichnet, daß die Leiterbahn (6) in eine in Längsrichtung des Kontaktträgers (5) verlaufende, zur offenen Seite hin sich widerhakenartig verengende Nut (10) eingeklipst ist.

3. Niveaugeber nach den Ansprüchen 1 oder 2, dadurch gekennzeichnet, daß die zwei Schleifkontakte (7, 8) einander gegenüberliegend angeordnet sind.

4. Niveaugeber nach zumindest einem der vorangehenden Ansprüche, dadurch gekennzeichnet, daß der Kontaktträger (5) als Rohrkörper ausgebildet ist, welcher zum Aufschieben auf das Wicklungsrohr (4) und zum Durchgreifen der das Wicklungsrohr (4) kontaktierenden Schleifkontakte (7, 8) einen in Längsrichtung über seine gesamte Länge verlaufenden Schlitz aufweist.

5. Niveaugeber nach zumindest einem der vorangehenden Ansprüche, dadurch gekennzeichnet, daß der Kontaktträger (5) aus einem die Leiterbahn (6) tragenden Halteabschnitt und zumindest zwei Paaren von über das Wicklungsrohr (4) greifenden Klammerarmen besteht.

## Claims

1. A level transmitter, particularly for fuel tanks of motor vehicles, which has a winding forming an electrical resistance path on which a float is disposed, the height of which float can vary and which is in contact with the resistance path by means of a first sliding contact, wherein the resistance path is connected to a voltage source and the float carries a second sliding contact conductively connected to the first sliding contact, characterised in that the resistance path is a winding tube (4) forming a guide shaft which carries a contact carrier (5), which is slid on from the side in the manner of a clamp, and which is constructed with a strip conductor (6), with which the second sliding contact (8) is in contact, running in its longitudinal direction for voltage feedback.

2. A level transmitter according to Claim 1, characterised in that the strip conductor (6) is clipped into a channel (10) which runs in the longitudinal direction of the contact carrier (5) and which narrows towards its open side in the manner of a barb.

3. A level transmitter according to Claims 1 or 2, characterised in that the two sliding contacts (7, 8) are disposed opposite one another.

4. A level transmitter according to at least one of the preceding Claims, characterised in that the contact carrier (5) is constructed as a tubular body which has a slot running over its entire length for sliding on to the winding tube (4) and which the sliding contacts (7, 8) which contact the winding tube (4) can pass through.

5. A level transmitter according to at least one of the preceding Claims, characterised in that the contact carrier (5) comprises a retaining section which carries the strip contact (6) and at least two pairs of clamping arms which grip across the winding tube (4).

## Revendications

1. Capteur de niveau, notamment pour réservoir de carburant d'automobiles, comportant un bobinage qui forme une piste électriquement résistante et sur lequel est disposé un flotteur mobile verticalement, dont un premier contact coulissant est appliqué contre cette piste résistante, ce qui réalise la liaison de la piste résistante avec une source de tension (électrique) et le flotteur portant un second contact coulissant est relié électriquement au premier, capteur caractérisé en ce que la piste résistante est le bobinage d'un tube (4) constituant une tige de guidage, qui porte un support (5) de contacts, lequel est glissé sur ce tube à la façon d'une agrafe et comporte une piste conductrice (6) longitudinale, qui est destinée au retour du courant et contre laquelle le second contact coulissant est appliqué.

2. Capteur de niveau selon la revendication 1, caractérisé en ce que la piste conductrice (6) est encastrée par déformation élastique dans une gorge longitudinale (10) du support de contacts (5), laquelle se rétrécit à la façon d'une agrafe vers son côté ouvert.

3. Capteur de niveau selon les revendications 1 ou 2, caractérisé en ce que les contacts coulissants (7, 8) sont disposés en face l'un de l'autre.

4. Capteur de niveau selon l'une au moins des revendications précédentes, caractérisé en ce que le support (5) de contacts est un corps tubulaire, qui comporte sur toute sa longueur une fente longitudinale, destinée à permettre de le glisser sur le tube bobiné (4) et à laisser passer le contact coulissant (7, 8) qui vient en contact avec le bobinage de ce tube (4).

5. Capteur de niveau selon l'une au moins des revendications précédentes, caractérisé en ce que le support (5) de contacts est composé d'un secteur de retenue portant la piste conductrice (6) et d'au moins deux paires de bras qui enserrent le tube bobiné (4).
